# EUROPÄISCHE PATENTSCHRIFT

(11) **EP 2 585 220 B1**
(45) Veröffentlichungstag und Bekanntmachung des Hinweises auf die Patenterteilung: **25.09.2013**
(21) Anmeldenummer: 11727196.5
(22) Anmeldetag: 24.06.2011
(51) Int. Cl.: B02C 19/00, B09B 3/00, B02C 23/26

(54) **VERFAHREN UND VORRICHTUNG ZUM ZERKLEINERN VON KÜHLGERÄTEN**
METHOD AND DEVICE FOR COMMINUTING REFRIGERATORS
PROCÉDÉ ET DISPOSITIF DE BROYAGE D'APPAREILS RÉFRIGÉRANTS

(30) Priorität: 25.06.2010 DE 102010030544
(43) Veröffentlichungstag der Anmeldung: 01.05.2013
(73) Patentinhaber: BHS-Sonthofen GmbH, 87527 Sonthofen (DE)
(72) Erfinder: SCHMANDRA, Angelo, 87509 Immenstadt (DE); DRECHSEL, Christopher, 87544 Blaichach (DE)
(74) Vertreter: Herzog, Markus
(86) Internationale Anmeldenummer: PCT/EP2011/060642
(87) Internationale Veröffentlichungsnummer: WO 2011/161252

(56) Entgegenhaltungen:
- EP-A2- 0 442 113
- DE-A1- 3 911 596
- DE-A1- 3 915 400
- DE-A1- 10 105 995
- DE-A1- 10 228 471

## Beschreibung

Die Erfindung betrifft ein Verfahren zum Zerkleinern von Kühlgeräten.

Die beim Zerkleinern von Kühlgeräten, beispielsweise Kühlschränken, Kühltruhen und dergleichen, freigesetzten Prozessgase stellen eine wichtige Randbedingung für das Zerkleinerungsverfahren dar:
Früher wurde zum Aufschäumen der Isolierschaumstoffe in den Mantelwandungen von Kühlgeräten Fluor-Chlor-Kohlenwasserstoffe (FCKW) verwendet, das bekanntermaßen die Ozon-Schicht schädigt. Daher kann eine Freisetzung von FCKW bei der Zerkleinerung von Kühlgeräten nicht toleriert werden. Infolgedessen müssen Kühlgeräte in geschlossenen Vorrichtungen zerkleinert werden. Später wurde FCKW dann durch unschädlichere Kohlenwasserstoffe ersetzt, beispielsweise Cyclopentan, Isobutan oder dergleichen. Zur Vereinfachung der Terminologie wird die vorliegende Erfindung nachstehend am Beispiel von Cyclopentan, kurz Pentan genannt, erläutert werden.

Diese Kohlenwasserstoffe haben aber allerdings meist den Nachteil, dass oberhalb einer vorbestimmten Konzentration in Luft explosiv zu sein. So ist Pentan beispielsweise bei einer Konzentration von mehr als 40 g pro Kubikmeter Luft explosiv. Da sowohl ältere FCKW-Kühlgeräte als auch jüngere Pentan-Kühlgeräte aus wirtschaftlichen Gründen in ein und derselben Vorrichtung zerkleinert werden müssen, stellt die mit einer Anreicherung von Pentan in dem geschlossenen Volumen einhergehende Explosionsgefahr ein Problem dar.

Ein Verfahren zum Zerkleinern von Kühlgeräten gemäß dem Oberbegriff des Anspruchs 1 ist aus der DE 39.11 596 A1 bekannt.

Bei einem weiteren bekannten Verfahren wird mit einem diskontinuierlichen Prozess gearbeitet. Eine vorbestimmte Anzahl von Kühlgeräten wird in einen Zerkleinerungsraum eingebracht. Anschließend wird der Zerkleinerungsraum geschlossen, um ein Austreten des bei der Zerkleinerung älterer Kühlgeräte freigesetzten Prozessgases FCKW verhindern zu können. Ferner wird der Zerkleinerungsraum mit Stickstoffgas gespült, um die Explosionsgefahr des bei der Zerkleinerung jüngerer Kühlgeräte freigesetzten Prozessgases Pentan zu bannen. Nun wird die Zerkleinerungsvorrichtung für eine vorbestimmte Zeitdauer betrieben, die ausreicht, um die Kühlgeräte in dem gewünschten Maße zu zerkleinern. Schließlich wird das zerkleinerte Kühlgerätematerial aus dem Zerkleinerungsraum wieder ausgetragen, und der Prozess kann mit einer neuen Charge von. Kühlgeräten erneut beginnen.

Dieses Chargen-Zerkleinerungsverfahren mit Stickstoff-Inertisierung hat den Nachteil hoher Betriebskosten. Dies liegt zum einen am diskontinuierlichen Chargen-Betrieb und zum anderen an den Kosten für die Bereitstellung des für die Inertisierung erforderlichen Stickstoffgases.

Aus der DE 102 28 471 A1 ist eine Zerkleinerungseinrichtung bekannt, welche chargenweise arbeitet, wobei Strömungs- und Druckverhältnisse in einem Zerkleinerungsraum der Zerkleinerungseinrichtung derart eingestellt sind, dass eine Ansaugung von Luft in den Zerkleinerungsraum vermieden wird.

Die DE 101 05 995 A1 offenbart ein Verfahren zur fortlaufenden Zerkleinerung von Kühlgeräten, bei dem ein innerhalb einer Zerkleinerungsmaschine enthaltenes Schaumgas über eine Lufttransportrohrleitung in einen Staubsammler gesaugt werden kann.

Die EP 0 442 113 A2 offenbart ein Verfahren und eine Vorrichtung zum Zerkleinern von Kühlgeräten, wobei ein Zerkleinerungsraum einer Zerkleinerungsvorrichtung nicht gesondert mit Luft gespült wird und die Zerkleinerungseinrichtung in einer luftdicht abgeschlossenen Werkhalle angeordnet ist.

Die DE 39 15 400 A1 offenbart ein Verfahren und eine Vorrichtung zur Entsorgung von FCKW-haltigen Schaumstoffen, wobei eine Zerkleinerungsvorrichtung mittels einer ersten Schleuse und einer zweiten Schleuse luftdicht abgeschlossen ist, so dass keine kontinuierliche Luftzufuhr oder -abfuhr stattfinden kann.

Es ist Aufgabe der vorliegenden Erfindung, ein wirtschaftliches und umweltverträgliches Verfahren zum Zerkleinern von Kühlgeräten anzugeben.

Diese Aufgabe wird erfindungsgemäß gelöst durch ein Verfahren zum Zerkleinern von Kühlgeräten, bei welchem die Kühlgeräte durch eine Zufuhröffnung eines Zerkleinerungsraums in den Zerkleinerungsraum eingebracht werden, in dem Zerkleinerungsraum kontinuierlich zerkleinert werden, und zerkleinertes Kühlgerätematerial durch eine Austragsöffnung des Zerkleinerungsraums wieder aus dem Zerkleinerungsraum ausgetragen wird, der Zerkleinerungsraum mit Luft gespült wird, indem von der in dem Zerkleinerungsraum vorhandenen, mit bei der Zerkleinerung der Kühlgeräte anfallenden Prozessgasen angereicherten Luft pro Zeiteinheit ein vorbestimmtes Volumen durch eine mit der Austragsöffnung und einer Gasbehandlungseinrichtung in Gasführungsverbindung stehende Gasführungsleitung der Gasbehandlungseinrichtung zugeführt wird, und ein diesem vorbestimmten Volumen entsprechendes Luftvolumen dem Zerkleinerungsraum durch die Zufuhröffnung zugeführt wird, welches Verfahren sich dadurch auszeichnet, dass das dem vorbestimmten Volumen entsprechende Luftvolumen dem Zerkleinerungsraum kontinuierlich durch die Zuführöffnung zugeführt wird, dass das vorbestimmte Luftvolumen derart eingestellt ist, dass trotz kontinuierlicher Luftzufuhr durch die Zufuhröffnung ein im Zerkleinerungsraum und den mit diesem verbundenen Gasführungsleitungen herrschender Druck auf einem Wert gehalten wird, der niedriger ist als der Wert des Umgebungsdrucks.

Dadurch, dass man den im Zerkleinerungsraum und den mit diesem verbundenen Gasführungsleitungen herrschenden Druck auf einem Wert hält, der niedriger ist als der Wert des Umgebungsdrucks, kann das Risiko eines unkontrollierten Austritts der bei der Zerkleinerung von Kühlgeräten anfallenden Prozessgase, insbesondere FCKW und Pentan, aus dem Zerkleinerungsraum und den mit diesem verbundenen Gasführungsleitungen weiter reduziert werden. Ferner kann durch diese Maßnahme durch etwaig vorhandene Lecks keine mit Prozessgasen angereicherte Luft aus dem Zerkleinerungsraum und den Gasführungsleitungen austreten. Vielmehr wird durch diese Lecks allenfalls Luft aus der äußeren Umgebung in den Zerkleinerungsraum angesaugt. Dies gilt auch für systembedingte Lecks, beispielsweise den sich an die Austragsöffnung anschließenden Materialaustrag für zerkleinertes Kühlgerätematerial. Zwar kommen hier Schleusensysteme zum Einsatz, beispielsweise eine Zellenradschleuse, diese sind aber nie vollständig dicht, sondern führen stets zu einem nicht zu verhindernden Eintrag von Luft. Das hierdurch pro Zeiteinheit eingetragene Luftvolumen ist jedoch im Vergleich mit dem zum Spülen des Zerkleinerungsraums durch die Zufuhröffnung eingetragenen Volumen vernachlässigbar und kann im Zusammenhang mit der Erläuterung des Grundprinzips der vorliegenden Erfindung als Leckage betrachtet werden.

In diesem Zusammenhang ist darauf hinzuweisen, dass die Druckverhältnisse in dem Zerkleinerungsraum und den mit diesem verbundenen Gasführungsleitungen aufgrund des Zerkleinerungsvorgangs alles andere als homogen sind. Die vorstehende angesprochene Unterdruckbedingung gilt daher für den über das Volumen des Zerkleinerungsraums gemittelten Druckwert.

Eine wesentliche Erkenntnis des erfindungsgemäßen Verfahrens besteht darin, dass es zur Vermeidung der von dem Prozessgas Pentan ausgehenden Explosionsgefahr nicht notwendigerweise erforderlich ist, die in dem Zerkleinerungsraum herrschende Atmosphäre zu inertisieren, sondern dass es auch möglich ist, den Zerkleinerungsraum mit normaler Luft zu spülen. Da die hierfür erforderliche Luftmenge in einfacher Weise durch die Zufuhröffnung des Zerkleinerungsraums angesaugt werden kann, braucht das Zerkleinerungsverfahren auch nicht im Chargen-Betrieb durchgeführt zu werden, sondern kann kontinuierlich durchgeführt werden. Zum einen der Wegfall des Erfordernisses der Bereitstellung eines speziellen Inertisierungsgases, beispielsweise Stickstoff, und zum anderen die Konzipierung des erfindungsgemäßen Zerkleinerungsverfahrens als kontinuierliches Verfahren erhöhen die Effizienz und somit die Wirtschaftlichkeit des erfindungsgemäßen Verfahrens.

In Weiterbildung der Erfindung wird vorgeschlagen, dass von dem gesamten aus der Austragsöffnung austretenden Luftvolumen nur ein vorbestimmter Bruchteil der Gasbehandlungseinrichtung zugeführt wird, während die restliche durch die Austragsöffnung aus dem Zerkleinerungsraum austretende, mit bei der Zerkleinerung der Kühlgeräte anfallenden Prozessgasen angereicherte Luft durch eine sowohl mit der Austragsöffnung als auch mit der Zufuhröffnung in Gasführungsverbindung stehende weitere Gasführungsleitung wieder in den Zerkleinerungsraum zurückgeführt wird.

Diese Luftrückführung hat folgenden Vorteil: Es gibt Zerkleinerungsvorrichtungen, beispielsweise den BHS-Rotorshredder, die aufgrund ihrer Konstruktion als Gebläse wirken, das Luft durch die Zufuhröffnung ansaugt und aus der Austragsöffnung wieder ausstößt. Aufbau und Funktion des BHS-Rotorshredders sind beispielsweise in der WO 2004/024331 A1 beschrieben. Wie in dem nachfolgend noch zu erläuternden Ausführungsbeispiel noch gezeigt werden wird, ist der durch diesen Gebläseeffekt hervorgerufene Luftdurchsatz größer als das Luftvolumen, das pro Zeiteinheit der Gasbehandlungseinrichtung zugeführt werden muss, um sicherzustellen, dass die Konzentration an Pentan in dem Zerkleinerungsraum nicht den explosionskritischen Wert überschreitet. Das Vorsehen einer Rückführleitung hat daher den Vorteil, dass für das überschüssige Luftvolumen ein kontrollierter Strömungsverlauf bereitgestellt werden kann.

Um das aus dem Zerkleinerungsraum ausgetragene zerkleinerte Kühlgerätematerial entstauben zu können oder/und die Gefahr einer etwaigen Staubexplosion im Zerkleinerungsraum zumindest mindern zu können, wird vorgeschlagen, zumindest ein Teil des aus der Austragsöffnung austretenden Luftvolumens, vorzugsweise das gesamte aus der Austragsöffnung austretende Luftvolumen, einem Staubfilter zugeführt wird.

Ferner kann in einer den aus der Austragsöffnung austretenden Luftvolumen zumindest teilweise führenden Gasführungsleitung ein Gebläse vorgesehen sein. Mittel eines derartigen Gebläses kann beispielsweise ein über dem Staubfilter auftretender Druckabfall kompensiert werden. Es ist jedoch auch möglich, das Gebläse lediglich für die Einstellung der rückgeführten Luftmenge einzusetzen. Das Gebläse oder/und der Staubfilter können beispielsweise in der Rückführleitung angeordnet sein.

Zur weiteren Erhöhung der Betriebssicherheit wird vorgeschlagen, dass die Konzentration der Prozessgase im Zerkleinerungsraum überwacht wird. Dabei kann dann, wenn die Konzentration der Prozessgase im Zerkleinerungsraum einen vorbestimmten Grenzwert überschreitet, die Anzahl der pro Zeiteinheit dem Zerkleinerungsraum zugeführten Kühlgeräte reduziert werden.

Grundsätzlich ist es denkbar, dass zum Spülen des Zerkleinerungsraums ausschließlich Frischluft aus der Umgebung angesaugt wird. Da es in einer Anlage zur Zerkleinerung von Kühlgeräten aber üblicherweise auch andere Stellen gibt, an denen die Freisetzung von Prozessgas in die Umgebungsluft verhindert werden muss, wird in Weiterbildung der Erfindung vorgeschlagen, dass die dem Zerkleinerungsraum zum Spülen zugeführte Luftmenge zumindest teilweise an diesen Stellen angesaugt und dem Zerkleinerungsraum zugeführt wird.

Wie vorstehend bereits erwähnt, kann zur kontinuierlichen Zerkleinerung der Kühlgeräte beispielsweise ein BHS-Rotorshredder eingesetzt werden. Ganz allgemein eignen sich zur kontinuierlichen Zerkleinerung der Kühlgeräte Prallzerkleinerungsvorrichtungen besonders gut. Derartige Prallzerkleinerungsvorrichtungen werden üblicherweise mit hoher Drehzahl betrieben, damit ihre Zerkleinerungselemente beim Kontakt mit einem Kühlschrank bzw. Kühlschrankfragment ausreichend Schwung haben, um diesen bzw. diese zerkleinern zu können. Aufgrund der hohen Drehzahl erzeugen diese Prallzerkleinerungsvorrichtungen einen hohen Luftdurchsatz von der Zufuhröffnung zur Austragsöffnung. Bei dem BHS-Rotorshredder rührt dieser Luftdurchsatz beispielsweise daher, dass die Luft durch die Zentrifugalwirkung der Zerkleinerungselemente zusammen mit dem zerkleinerten Kühlgerätematerial durch einen an der Umfangswandung des Zerkleinerungsraums vorgesehenen Gitterrost radial nach außen gedrängt wird und von dort nach unten zur Austragsöffnung strömt.

Wie dies allgemein üblich ist, können auch bei dem erfindungsgemäßen Kühlgerätezerkleinerungsverfahren vorbestimmte Komponenten von den Kühlgeräten entfernt werden, bevor diese durch die Zufuhröffnung in den Zerkleinerungsraum eingebracht werden. Bei den vorbestimmten Komponenten kann es sich beispielsweise um Glas, Quecksilberschalter, Kondensatoren, Kabel, Kühlmittel und Öl, den Kompressor und die Türdichtungen handeln.

Nachzutragen ist noch, dass die Gasbehandlungseinrichtung beispielsweise eine Verbrennungsanlage sein kann, wobei die bei der Verbrennung freigesetzte thermische Energie beispielsweise zur Erzeugung von elektrischem Strom, von Fernwärme oder dergleichen genutzt werden kann. Alternativ ist es jedoch auch denkbar, dass die Prozessgase in der Gasbehandlungseinrichtung chemisch zersetzt werden.

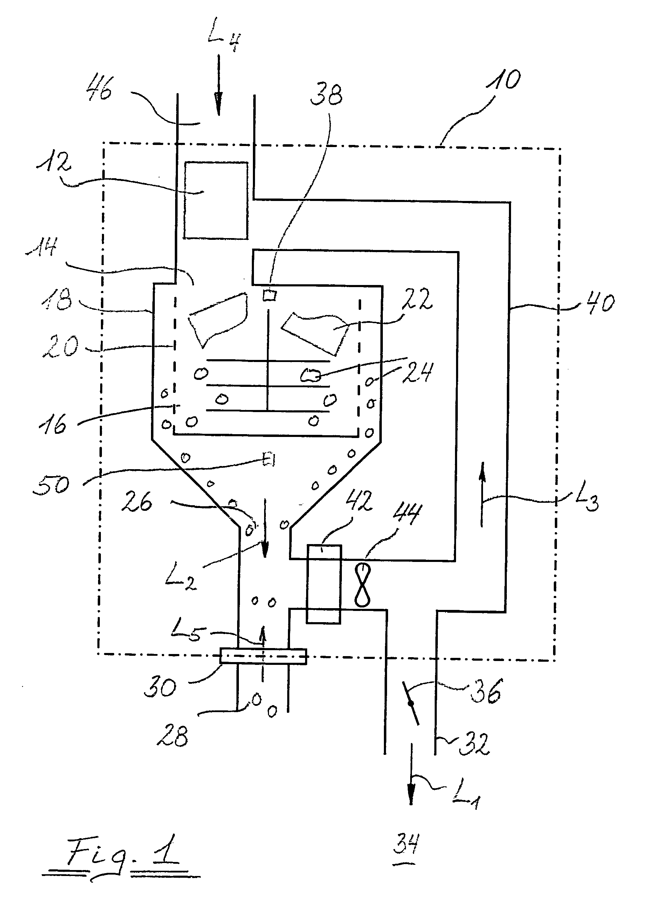

Die Erfindung wird im Folgenden an einem Ausführungsbeispiel anhand der einzigen Figur, der Figur 1, näher erläutert werden, welche eine grobschematische Darstellung des Aufbaus einer Vorrichtung zur Zerkleinerung von Kühlgeräten zeigt.

In Fig. 1 ist eine Vorrichtung zum kontinuierlichen Zerkleinern von Kühlgeräten 12 ganz allgemein mit 10 bezeichnet. Die Kühlgeräte werden in einer nicht dargestellten Vordemontage-Station von vorbestimmten Komponenten befreit, beispielsweise Glas, Quecksilberschalter, Kondensatoren, Kabel, Kühlmittel und Öl, dem Kompressor und den Türdichtungen, bevor sie über eine Zufuhröffnung 14 in den Zerkleinerungsraum 16 eines Zerkleinerungsgeräts 18 eingeleitet werden.

Das Zerkleinerungsgerät 18 kann ein Prallzerkleinerungsgerät sein, beispielsweise ein BHS-Rotorshredder, wie er in der WO 2004/024331 A1 beschrieben ist. Dieser BHS-Rotorshredder 18 verfügt über eine vertikale, drehangetriebene Welle 18a, mit der eine Mehrzahl von Zerkleinerungselementen 18b allseits beweglich verbunden ist. Eine Umfangswand des Zerkleinerungsraums 16 des BHS-Rotorshredders ist zumindest teilweise als Gitterrost 20 ausgeführt. In dem Zerkleinerungsraum 16 wirken die Zerkleinerungselemente 18b so lange auf die Kühlgeräte 12 bzw. Kühlgerätfragmente 22 ein, bis das zerkleinerte Kühlgerätematerial 24 eine Größe erreicht hat, die es ihm ermöglicht, durch den Gitterrost 20 hindurchzutreten und zur Austragsöffnung 26 zu gelangen.

Bei der Zerkleinerung der Kühlgeräte 12, insbesondere bei der Zerkleinerung der Isolierschaumstoffe der Mantelwandungen der Kühlgeräte 12, werden zwangsläufig Prozessgase freigesetzt. Von besonderer Bedeutung sind hierbei die bei älteren Kühlgeräten zum Aufschäumen des Isoliermaterials verwendeten Fluor-Chlor-Kohlenwasserstoffe (FCKW) und das bei jüngeren Kühlgeräten als Ersatz hierfür verwendete Pentan. Aufgrund seiner Umweltschädlichkeit darf FCKW nicht unkontrolliert in die äußere Umgebung gelangen. Ferner ist dafür Sorge zu tragen, dass die Konzentration von Pentan im Zerkleinerungsraum 16 nicht so stark ansteigt, dass es zu Explosionen kommen kann. Die Gefahr einer Explosion des Pentan-Luft-Gemischs besteht ab einer Konzentration von 40 g Pentan pro Kubikmeter Luft.

Um das unkontrollierte Austreten von FCKW verhindern zu können, ist die Vorrichtung 10 austrittsseitig abgeschlossen ausgebildet. Insbesondere ist der Materialaustrag 28, durch den das zerkleinerte Kühlgerätematerial 24 die Zerkleinerungsvorrichtung 10 verlässt, mit einer Schleusenvorrichtung 30 ausgebildet, beispielsweise einer Zellenradschleuse. Um eine zu starke Anreicherung von Pentan im Zerkleinerungsraum 16 verhindern zu können, wird durch eine mit der Austragsöffnung 26 in Verbindung stehende Gasführungsleitung 32 pro Zeiteinheit ein vorbestimmtes Volumen von mit Prozessgas angereicherter Luft aus dem Zerkleinerungsraum 16 zu einer nicht näher dargestellten Gasbehandlungseinrichtung 34 gefördert. Der Luftdurchsatz L₁ durch die Leitung 32 kann beispielsweise 5.000 m³/h betragen, d.h. deutlich mehr als 1 m³/s. Der Wert des Luftdurchsatzes L₁ kann einstellbar sein, beispielsweise durch ein Gebläse oder, wie schematisch dargestellt, durch eine Strömungsbegrenzung 36.

Im vorliegenden Beispielsfall, in dem der Zerkleinerungsraum ein Volumen von etwa 20 m³ aufweist, kann der Wert der Pentankonzentration in dem Pentan-Luft-Gemisch des Zerklerinerungsraums durch die Absaugung der Luftmenge L₁ unter einem vorgegebenen Grenzwert gehalten werden, beispielsweise unter 10 g/m³, d.h. etwa 25% des explosionskritischen Werts. Die Einhaltung dieses Grenzwerts kann beispielsweise mittels eines Sensors 38 überwacht werden.

Der vorstehend genannte Grenzwert wird selbst dann eingehalten, wenn man davon ausgeht, dass der Zerkleinerungsraum 16 ausschließlich mit Pentan-Kühlgeräten 12 beschickt wird, pro Minute ein Kühlgerät mit einer Pentanmenge von 250 g in den Zerkleinerungsraum 16 eingebracht wird, und diese Menge an Pentan in dem Zerkleinerungsraum 16 vollständig freigesetzt wird, und dies während der ersten 10 bis 15 Sekunden der Zerkleinerung. Bedenkt man dass ein beachtlicher Anteil des Pentans in dem Isoliermaterial gebunden bleibt und erst in weiteren Aufbereitungsschritten aus diesem entfernt wird, und berücksichtigt man ferner, dass nicht jedes dem Zerkleinerungsraum 16 zugeführte Kühlgerät 12 Pentan enthält, so sieht man leicht ein, dass pro Minute auch mehr als ein Kühlgerät 12 zerkleinert werden kann.

In der Praxis kann beispielsweise der von dem Sensor 38 erfasste Wert der Pentan-Konzentration einer nicht dargestellten Steuereinheit zugeführt werden, welche die Fördergeschwindigkeit einer Transportvorrichtung zum Zuführen der Kühlgeräte 12 in den Zerkleinerungsraum 16 steuert. Steigt der Wert der Pentan-Konzentration an, so kann die Steuereinheit die Fördergeschwindigkeit reduzieren und damit die Anzahl der pro Zeiteinheit zugeführten Kühlgeräte senken. Nimmt der Wert der Pentan-Konzentration hingegen ab, so kann die Steuereinheit die Fördergeschwindigkeit und damit die Anzahl der pro Zeiteinheit zugeführten Kühlgeräte erhöhen.

Wie vorstehend bereits erwähnt, wirkt der BHS-Rotorshredder 18 als Gebläse, das Luft durch die Zufuhröffnung 14 ansaugt und durch die Austragsöffnung 26 wieder ausstößt. Im vorliegenden Beispielsfall kann der Luftdurchsatz L₂ etwa 24.000 m³/h betragen, also rund das 5-Fache des Luftdurchsatzes, der aus dem Zerkleinerungsraum 16 abgesaugt werden muss, um die Pentankonzentration in dem Pentan-Luft-Gemisch des Zerklerinerungsraums auf einem sicheren Wert zu halten.

Im Hinblick auf die unterschiedlichen Werte der Luftdurchsätze L₁ und L₂ kann, um für eine geordnete Luftströmung in der Zerkleinerungsvorrichtung 10 sorgen zu können, vorzugsweise eine Rückführleitung 40 vorgesehen werden, die die aus der Austragsöffnung 26 ausgestoßene, überschüssige Luft L₃ wieder zur Zufuhröffnung 14 zurückführt.

Wie vorstehend erwähnt, kann der Luftaustrag aus der Zerkleinerungsvorrichtung 10 durch die Leitung 32 beispielsweise 5.000 m³/h betragen. Diese Luftmenge wird bis auf Leckagen ausschließlich über die Zufuhröffnung 14 angesaugt (L₄ = L₁). Insbesondere ist die Luftmenge Ls, die durch die Schleusenvorrichtung 30 in die Zerkleinerungsvorrichtung 10 eintreten kann, sehr viel geringer als dieser Wert und kann im Rahmen der Erläuterung der vorliegenden Erfindung als Leckage angesehen werden.

Im Hinblick auf die Tatsache, dass der angesaugte Luftstrom L₄ etwa 5.000 m³/h beträgt, sieht man leicht ein, dass zufuhrseitig keine Schleusenvorrichtung vorgesehen zu werden braucht, sondern dass es ausreicht, den Querschnitt der Eintrittsöffnung 46 unter Berücksichtigung der Abmessungen der größten zu zerkleinernden Kühlgeräte 12 möglichst klein zu wählen. Zudem kann zumindest ein Teil des angesaugten Luftstroms L₄ von (nicht dargestellten) Stellen der Gesamtanlage zum Recycling von Kühlgeräten zugeführt werden, an denen ebenfalls das Risiko einer Freisetzung von Prozessgas besteht, beispielsweise einer Vorrichtung, in der die zerkleinerten Isolierschaumstoffe mit dem darin noch enthaltenen Schäumungsgas zur Bildung von Pellets komprimiert werden, wobei das Schäumungsgas aus den Poren der Schaumstoffe herausgedrückt wird.

Um das aus dem Zerkleinerungsraum 16 ausgetragene zerkleinerte Kühlgerätematerial entstauben zu können oder/und um die Staubkonzentration in der in der Rückführleitung 40 zirkulierenden Luft reduzieren und damit das Risiko einer Staubexplosion senken zu können, kann in der Rückführleitung 40, vorzugsweise noch vor der Abzweigung der zur Gasbehandlungseinrichtung 34 führenden Leitung 32, ein Staubfilter 42 angeordnet sein. Sollte der Druckabfall über den Staubfilter 42 zu groß sein, so kann in der Rückführleitung 40 zusätzlich ein Gebläse 44 vorgesehen werden.

Nachzutragen ist noch, dass in dem Zerkleinerungsraum 16 ferner ein Drucksensor 50 angordnet sein kann, um durch eine geeignete Steuerung, beispielsweise des Gebläses 44 oder/und der Strömungsbegrenzung 36, sicherstellen zu können, dass der im Zerkleinerungsraum herrschende Druck niedriger ist als der Druck in der äußeren Umgebung der Zerkleinerungsvorrichtung 10.

Abschließend sei angemerkt, dass das erfindungsgemäße Konzept nicht an den Einsatz schnell laufender Zerkleinerungsgeräte, beispielsweise von Prallzerkleinerungsgeräten, gebunden ist, sondern auch in Verbindung mit langsame laufenden Zerkleinerungsgeräten, beispielsweise Schneidzerkleinerungsgeräten, zur Anwendung kommen kann.

## Patentansprüche

1. Verfahren zum Zerkleinern von Kühlgeräten (12), bei welchem:
die Kühlgeräte (12) durch eine Zufuhröffnung (14) eines Zerkleinerungsraums (16) in den Zerkleinerungsraum (16) eingebracht werden, in dem Zerkleinerungsraum (16) kontinuierlich zerkleinert werden, und zerkleinertes Kühlgerätematerial (24) durch eine Austragsöffnung (26) des Zerkleinerungsraums (16) wieder aus dem Zerkleinerungsraum (16) ausgetragen wird,
der Zerkleinerungsraum (16) mit Luft gespült wird, indem von der in dem Zerkleinerungsraum (16) vorhandenen, mit bei der Zerkleinerung der Kühlgeräte (12) anfallenden Prozessgasen angereicherten Luft pro Zeiteinheit ein vorbestimmtes Volumen (L₁) durch eine mit der Austragsöffnung (26) und einer Gasbehandlungseinrichtung (34) in Gasführungsverbindung stehende Gasführungsleitung (32) der Gasbehandlungseinrichtung (34) zugeführt wird, und ein diesem vorbestimmten Volumen (L₁) entsprechendes Luftvolumen (L₄) dem Zerkleinerungsraum (16) durch die Zufuhröffnung (14) zugeführt wird, **dadurch gekennzeichnet, dass** das dem vorbestimmten Volumen (L₁) entsprechende Luftvolumen (L₄) dem Zerkleinerungsraum (16) kontinuierlich durch die Zufuhröffnung (14) zugeführt wird, und dass das vorbestimmte Volumen (L₁) derart eingestellt ist, dass trotz kontinuierlicher Luftzufuhr durch die Zufuhröffnung (14) ein im Zerkleinerungsraum (16) und den mit diesem verbundenen Gasführungsleitungen (32, 40) herrschender Druck auf einem Wert gehalten wird, der niedriger ist als der Wert des Umgebungsdrucks.

2. Kühlgerätezerkleinerungsverfahren nach Anspruch 1,
**dadurch gekennzeichnet, dass** von dem gesamten aus der Austragsöffnung (26) austretenden Luftvolumen (L₂) nur ein vorbestimmter Bruchteil der Gasbehandlungseinrichtung (34) zugeführt wird, während die restliche durch die Austragsöffnung (26) aus dem Zerkleinerungsraum (16) austretende, mit bei der Zerkleinerung der Kühlgeräte (12) anfallenden Prozessgasen angereicherte Luft durch eine sowohl mit der Austragsöffnung (26) als auch mit der Zufuhröffnung (14) in Gasführungsverbindung stehende weitere Gasführungsleitung (40) wieder in den Zerkleinerungsraum (16) zurückgeführt wird.

3. Kühlgerätezerkleinerungsverfahren nach Anspruch 1 oder 2,
**dadurch gekennzeichnet, dass** zumindest ein Teil des aus der Austragsöffnung (26) austretenden Luftvolumens (L₂), vorzugsweise das gesamte aus der Austragsöffnung (26) austretende Luftvolumen (L₂), einem Staubfilter (42) zugeführt wird.

4. Kühlgerätezerkleinerungsverfahren nach einem der Ansprüche 1 - 3,
**dadurch gekennzeichnet, dass** in einer den aus der Austragsöffnung (26) austretenden Luftvolumen (L₂) zumindest teilweise führenden Gasführungsleitung (40) ein Gebläse (44) vorgesehen ist.

5. Kühlgerätezerkleinerungsverfahren nach einem der Ansprüche 1 - 4,
**dadurch gekennzeichnet, dass** die Konzentration der Prozessgase im Zerkleinerungsraum (16) überwacht wird:

6. Kühlgerätezerkleinerungsverfahren nach Anspruch 5,
**dadurch gekennzeichnet, dass** dann, wenn die Konzentration der Prozessgase im Zerkleinerungsraum (16) einen vorbestimmten Grenzwert überschreitet, die Anzahl der pro Zeiteinheit dem Zerkleinerungsraum (16) zugeführten Kühlgeräte (12) reduziert wird.

7. Kühlgerätezerkleinerungsverfahren nach einem der Ansprüche 1 - 6,
**dadurch gekennzeichnet, dass** die durch die Zufuhröffnung (14) dem Zerkleinerungsraum (16) zugeführte Luftmenge (L₄) zumindest teilweise von Stellen einer Anlage zur Zerkleinerung von Kühlgeräten (12) zugeführt wird, an denen ebenfalls Prozessgas freigesetzt wird.

8. Kühlgerätezerkleinerungsverfahren nach einem der Ansprüche 1 - 7,
**dadurch gekennzeichnet, dass** zur kontinuierlichen Zerkleinerung der Kühlgeräte (12) eine Prallzerkleinerungsvorrichtung (18) eingesetzt wird, vorzugsweise ein Rotorshredder.

9. Kühlgerätezerkleinerungsverfahren nach einem der Ansprüche 1 - 8,
**dadurch gekennzeichnet, dass** vorbestimmte Komponenten von den Kühlgeräten (12) entfernt werden, bevor diese durch die Zufuhröffnung (14) in den Zerkleinerungsraum (16) eingebracht werden.

10. Kühlgerätezerkleinerungsverfahren nach einem der Ansprüche 1 bis 9,
**dadurch gekennzeichnet, dass** das vorbestimmte Volumen (L₁) derart eingestellt ist, dass kein explosionskritischer Konzentrationsgrenzwert in dem Zerkleinerungsraum erreicht oder/und überschritten wird.

## Claims

1. Method for comminuting refrigeration appliances (12), in which:
the refrigeration appliances (12) are introduced into a comminution chamber (16) through a supply opening (14) of the comminution chamber (16), are continuously comminuted in the comminution chamber (16), and comminuted refrigeration appliance material (24) is discharged from the comminution chamber (16) through a discharge opening (26) of the comminution chamber (16),
the comminution chamber (16) is flushed with air in that, per time unit, a predetermined volume (L₁) of the air which is present in the comminution chamber (16) and which is enriched with process gases which occur during comminution of the refrigeration appliances (12) is supplied to a gas processing means (34) through a gas conveying line (32) which is connected in a gas conveying manner to the discharge opening (26) and the gas processing means (34), and a volume of air (L₄) corresponding to that predetermined volume (L₁) is supplied to the comminution chamber (16) through the supply opening (14),
**characterised in that** the volume of air (L₄) corresponding to the predetermined volume (L₁) is continuously supplied to the comminution chamber (16) through the supply opening (14), and **in that** the predetermined volume (L₁) is adjusted in such a manner that, in spite of continuous air supply through the supply opening (14), a pressure prevailing in the comminution chamber (16) and in the gas conveying lines (32, 40) which are connected thereto is kept to a value which is lower than the value of the ambient pressure.

2. Refrigeration appliance comminution method according to claim 1, **characterised in that**, of the entire volume of air (L₂) being discharged from the discharge opening (26), only a predetermined fraction is supplied to the gas processing means (34), whilst the remainder of the air which is discharged from the comminution chamber (16) through the discharge opening (26) and which is enriched with process gases which occur during comminution of the refrigeration appliances (12) is returned to the comminution chamber (16) through an additional gas conveying line (40) which is connected in a gas conveying manner both to the discharge opening (26) and to the supply opening (14).

3. Refrigeration appliance comminution method according to claim 1 or 2, **characterised in that** at least a portion of the volume of air (L₂) being discharged from the discharge opening (26), preferably the entire volume of air (L₂) being discharged from the discharge opening (26), is supplied to a dust filter (42).

4. Refrigeration appliance comminution method according to any of the claims 1 to 3,
**characterised in that** a fan (44) is provided in a gas conveying line (40) which at least partially conveys the volume of air (L₂) being discharged from the discharge opening (26).

5. Refrigeration appliance comminution method according to any of the claims 1 to 4,
**characterised in that** the concentration of the process gases in the comminution chamber (16) is monitored.

6. Refrigeration appliance comminution method according to claim 5,
**characterised in that**, if the concentration of process gases in the comminution chamber (16) exceeds a predetermined threshold value, the number of refrigeration appliances (12) supplied to the comminution chamber (16) per time is reduced.

7. Refrigeration appliance comminution method according to any of the claims 1 to 6,
**characterised in that** the quantity of air (L₄) supplied to the comminution chamber (16) through the supply opening (14) is at least partially supplied from locations of an installation for comminuting refrigeration appliances (12) at which process gas is also released.

8. Refrigeration appliance comminution method according to any of the claims 1 to 7,
**characterised in that**, for continuous comminution of the refrigeration appliances (12), an impact crusher (18) is used, preferably a rotor shredder.

9. Refrigeration appliance comminution method according to any of the claims 1 to 8,
**characterised in that** predetermined components are removed from the refrigeration appliances (12) before they are introduced through the supply opening (14) into the comminution chamber (16).

10. Refrigeration appliances comminution method according to any of the claims 1 to 9,
**characterised in that** the predetermined volume (L₁) is adjusted in such a manner that no explosion-critical concentration threshold value is reached and/or exceeded in the comminution chamber.

## Revendications

1. Procédé de broyage d'appareils réfrigérants (12), dans lequel
on introduit les appareils réfrigérants (12) dans une chambre de broyage (16) à travers une ouverture de chargement (14) de la chambre de broyage (16), on les broie en continu dans la chambre de broyage (16) et on extrait de nouveau les matériaux des appareils réfrigérants broyés (24) hors de la chambre de broyage (16) à travers une ouverture de sortie (26) de la chambre de broyage (16),
on balaie à l'air la chambre de broyage (16), du fait que l'on envoie, par unité de temps, un volume prédéterminé (L₁) de l'air présent dans la chambre de broyage (16) et enrichi avec des gaz de traitement produits lors du broyage des appareils réfrigérants (12), à travers une conduite de transport de gaz (32) se trouvant en communication de transport de gaz avec l'ouverture de sortie (26) et avec un dispositif de traitement des gaz (34), au dispositif de traitement des gaz (34), et on envoie à la chambre de broyage (16), à travers l'ouverture de chargement (14), un volume d'air (L₄) correspondant à ce volume prédéterminé (L₁),
**caractérisé en ce que** l'on envoie le volume d'air (L₄) correspondant au volume prédéterminé (L₁) en continu à la chambre de broyage (16) à travers l'ouverture de chargement (14), et **en ce que** l'on règle le volume prédéterminé (L₁) de telle manière que, malgré l'apport d'air continu par l'ouverture de chargement (14), une pression régnant dans la chambre de broyage (16) et les conduites de transport de gaz (32, 40) raccordées à celle-ci soit maintenue à une valeur, qui est inférieure à la valeur de la pression ambiante.

2. Procédé de broyage d'appareils réfrigérants selon la revendication 1, **caractérisé en ce que**, de tout le volume d'air (L₂) sortant par l'ouverture de sortie (26), on n'envoie qu'une fraction prédéterminée au dispositif de traitement des gaz (34), tandis que l'on renvoie de nouveau dans la chambre de broyage (16) le reste de l'air sortant de la chambre de broyage (16) par l'ouverture de sortie (26) et enrichi par les gaz de traitement produits lors du broyage des appareils réfrigérants (12), par une autre conduite de transport de gaz (40) se trouvant en communication de transport de gaz aussi bien avec l'ouverture de sortie (26) qu'avec l'ouverture de chargement (14).

3. Procédé de broyage d'appareils réfrigérants selon la revendication 1 ou 2, **caractérisé en ce que** l'on envoie au moins une partie du volume d'air (L₂) sortant de l'ouverture de sortie (26), de préférence la totalité du volume d'air (L₂) sortant de l'ouverture de sortie (26), à un filtre à poussières (42).

4. Procédé de broyage d'appareils réfrigérants selon l'une quelconque des revendications 1 à 3, **caractérisé en ce qu'**il est prévu une soufflante (44) dans une conduite de transport de gaz (40) transportant au moins partiellement le volume d'air (L₂) sortant de l'ouverture de sortie (26).

5. Procédé de broyage d'appareils réfrigérants selon l'une quelconque des revendications 1 à 4, **caractérisé en ce que** l'on surveille la concentration des gaz de traitement dans la chambre de broyage (16).

6. Procédé de broyage d'appareils réfrigérants selon la revendication 5, **caractérisé en ce que**, lorsque la concentration des gaz de traitement dépasse une valeur limite prédéterminée dans la chambre de broyage (16), on réduit le nombre d'appareils réfrigérants (12) chargés dans la chambre de broyage (16) par unité de temps.

7. Procédé de broyage d'appareils réfrigérants selon l'une quelconque des revendications 1 à 6, **caractérisé en ce que** l'on envoie la quantité d'air (L₄) fournie à la chambre de broyage (16) par l'ouverture de chargement (14) au moins partiellement à partir d'endroits d'une installation de broyage d'appareils réfrigérants (12) où il se libère également du gaz de traitement.

8. Procédé de broyage d'appareils réfrigérants selon l'une quelconque des revendications 1 à 7, **caractérisé en ce que**, pour le broyage continu des appareils réfrigérants (12), on utilise un dispositif de broyage par impact (18), de préférence un déchiqueteur rotatif.

9. Procédé de broyage d'appareils réfrigérants selon l'une quelconque des revendications 1 à 8, **caractérisé en ce que** l'on élimine des composants prédéterminés des appareils réfrigérants (12), avant d'introduire ceux-ci dans la chambre de broyage (16) par l'ouverture de chargement (14).

10. Procédé de broyage d'appareils réfrigérants selon l'une quelconque des revendications 1 à 9, **caractérisé en ce que** l'on règle le volume prédéterminé (L₁) de telle manière qu'aucune valeur limite de concentration critique pour une explosion ne soit atteinte et/ou dépassée dans la chambre de broyage.
